(19) Europäisches Patentamt
European Patent Office
Office européen des brevets

(11) Veröffentlichungsnummer: **0 229 382 B1**

(12) **EUROPÄISCHE PATENTSCHRIFT**

(45) Veröffentlichungstag der Patentschrift: **10.06.92**

(51) Int. Cl.5: **C08L 77/00**, C08K 3/16, C08K 3/10

(21) Anmeldenummer: **86117967.9**

(22) Anmeldetag: **23.12.86**

Die Akte enthält technische Angaben, die nach dem Eingang der Anmeldung eingereicht wurden und die nicht in dieser Patentschrift enthalten sind.

(54) **Verfahren zur Herstellung stabilisierter Polyamide.**

(30) Priorität: **15.01.86 DE 3600890**

(43) Veröffentlichungstag der Anmeldung:
**22.07.87 Patentblatt 87/30**

(45) Bekanntmachung des Hinweises auf die Patenterteilung:
**10.06.92 Patentblatt 92/24**

(84) Benannte Vertragsstaaten:
**CH DE FR GB IT LI NL**

(56) Entgegenhaltungen:
EP-A- 0 063 687
DE-A- 2 605 794
DE-B- 1 170 639

**PATENT ABSTRACTS OF JAPAN, unexami-ned applications, C Feld, vol. 8, Nr. 114, 26. Mai 1984, THE PATENT OFFICE JAPANESE GOVERNMENT Seite 95 C 225**

(73) Patentinhaber: **BAYER AG**
**W-5090 Leverkusen 1 Bayerwerk(DE)**

(72) Erfinder: **Istel, Erich, Dr.**
**Friedrich-Ebert-Strasse 3**
**W-4047 Dormagen 1(DE)**
Erfinder: **Zimmermann, Franz**
**Am Hasenberg 30**
**W-4040 Neuss(DE)**

**Beschreibung**

Die Erfindung betrifft ein Verfahren zur Herstellung von Formkörpern aus hochmolekularen synthetischen Polyamiden, die gegen Alterung durch Licht, Hitze und Witterungseinflüsse stabilisiert sind.

Synthetische hochmolekulare Polyamide wie Polyamid-6, Polyamid-6.6, Polyamid-11 und andere werden durch die Einwirkung von Licht und Hitze sowie durch andere Witterungseinflüsse abgebaut. Dieser molekulare Abbau, der durch fotoaktive Pigmente, absorbierte organische und anorganische Säuren und andere Stoffe noch erheblich beschleunigt werden kann, führt zu einem starken Abfall der mechanischen Eigenschaften. Besonders gefährdet sind Farmkörper mit einer großen Oberfläche, wie Fasern, Filamente, Drähte und Folien, bei denen bei ungenügender Stabilisierung ein rascher Abfall der Reißkraft und Reißdehnung eintritt.

Es sind zahlreiche Vorschläge gemacht worden, wie hochmolekulare synthetische Polyamide stabilisert werden können. Nach der DE-OS 24 21 802 werden Kupferkomplexverbindungen verwendet, die aus Kupfer-I-halogeniden und der 2- bis 27-fachen molaren Menge an Lithiumhalogeniden bestehen. Die Komplexverbindungen müssen zunächst in einem getrennten Verfahren hergestellt werden, bevor sie zur Stabilisierung einsetzbar sind.

Nach einem weiteren Vorschlag (DE-OS 26 05 794) werden den Polyamidmassen vor oder nach der Polymerisation ein Kupfersalz, ein Alkali- oder Erdalkalihalogenid und ein Glykol getrennt oder gemeinsam zugesetzt.

In beiden Fällen werden der Stabilisator bzw. die Stabilisatorkomponenten dem zu verformenden Polyamid direkt zugesetzt.

Es wurde nun überraschenderweise gefunden, daß man auf eine Präformierung des Kupferkomplexes bzw. auf die Mitverwendung eines Glykols verzichten kann und doch eine ausgezeichnete Stabilisierung erhält, wenn man Kupfer-I-iodid und einen molaren Überschuß, bezogen auf das Kupfer-(I)-iodid, an LiBr, Caprolactam gegebenenfalls Wasser und/oder Pigmente vermischt, die Mischung zu einem Stabilisatorkonzentrat polymerisiert und das Polymerisat zu einem Granulat verarbeitet, das dem zu stabilisierenden Polyamid zugesetzt wird.

Gegenstand der Erfindung ist daher ein Verfahren zur Herstellung von Formkörpern aus stabilisierten, synthetischen hochmolekularen Polyamiden unter Verwendung eines Cu(I)-Halogenids und eines molaren Überschusses, bezogen auf Cu(I)-Halogenid, eines Alkalihalogenids, dadurch gekennzeichnet, daß man ein Gemisch, bestehend aus Cu(I)-Iodid, einem molaren Überschuß von 300 bis 800 Mol-% an LiBr, Caprolactam und gegebenenfalls Wasser und/oder Pigmenten bei Temperaturen von 240 bis 290°C zu einem Stabilisatorkonzentrat polymerisiert, die Schmelze dieses Stabilisatorkonzentrats zu einem Granulat verarbeitet, und zusammen mit dem zu stabilisierenden Polyamidgranulat zu Formkörpern mit einem Gehalt von 10 bis 100 mg Cu(I) pro kg fertigem Formkörper verarbeitet.

Die Kupfermenge wird vorzugsweise so bemessen, daß im fertigen Formkörper 10 bis 100 mg Cu-(I)/kg Polyamid, insbesondere 30 bis 60 mg Cu-I/kg Polyamid vorliegen. Das Konzentrat wird vorzugsweise in einer Menge von wenigstens 0,5 Gew.-%, vorzugsweise 1 bis 6 Gew.-%, bezogen auf Polyamid und Konzentrat, in das zu stabilisierende Polyamid eingearbeitet.

Die zu stabilisierenden Polyanide sind vorzugsweise Polyamid-6, Polyamid-6,6 und Polyamid 11.

Die Polymerisation wird bei 240 bis 290°C und Drücken von 0,1 bis 10 bar durchgeführt.

Dem Polymerisationsansatz können weiterhin polymerisationsbeständige Pigmente wie Ruß, Titandioxid oder Kupferphthalocyanin zugesetzt werden.

Beispiel 1

In einem mit einem Schnellrührer ausgerüsteten Behälter wird ein Gemisch aus 146,1 kg Caprolactam, 15 kg Wasser, 3 kg LiBr und 0,9 kg CuJ 5 Min. homogenisiert und anschließend in einen Polymerisationsautoklaven gefüllt. Unter Rühren wird das Gemisch bei einem Druck von 4-5 bar in etwa 90 Minuten auf 260°C erhitzt. Nach 3 Stunden wird der Autoklav entspannt und die Schmelze unter Rühren 3 Stunden mit einem trockenen Stickstoff-Strom von 50 1/ Stunde nachkondensiert, auf einem Gießband verkabelt und granuliert. Das Konzentrat-Granulat enthält 0,2 Gew.-% monovalentes Kupfer Cu-(I) und 2 Gew.-% LiBr.

Enthält das Ansatzgemisch nur 96,1 kg Caprolactam, so resultiert ein Konzentratgranulat mit einem Cu-(I)-Gehalt von 0,3 Gew.-% und 3,0 Gew.-% LiBr. Abscheidungen von metallischem Kupfer treten nicht auf.

Beispiel 2

In einem Autoklav gemäß Beispiel 1 wird ein Gemisch aus 37,9 kg Caprolactam, 0,48 kg CuJ, 1,6 kg LiBr und 80 kg einer sorgfältig aufbereiteten, 50 gew.-%igen Titandioxid-Dispersion (Rutil-Modifikation) in gleichen Teilen Caprolactam und Wasser polymerisiert, wobei in der Aufheizphase durch Entspannen ein maximaler Überdruck von 4 bar eingehalten wird. Man erhält ein kombiniertes Konzentrat-Granulat mit 40 Gew.-% Titandioxid-Pigmenten, 0,16 Gew.-% Cu-(I)-Gehalt und 1,6 Gew.-% LiBr. Abscheidungen von metallischen Kupfer treten nicht auf.

Beispiel 3

30 kg Ruß werden sorgfältig in einem Gemisch aus 29 kg Wasser und 86 kg Caprolactam homogenisiert und zusammen mit 3 kg LiBr und 0,9 kg CuJ in den Behälter der Polymerisationsanlage gemäß Beispiel 1 gefüllt, gemischt und polymerisiert. Das schwarze Konzentrat-Granulat enthält 25 Gew.-% Ruß, 0,25 Gew.-% Cu-(I) und 2,5 Gew.-% LiBr. Abscheidungen von metallischen Kupfer treten nicht auf.

Beispiel 4

In einer mit Kondensat-Vorlage und Rührwerk ausgestatteten Glas-Apparatur werden unter Sauerstoff-Ausschluß 130 g Caprolactam, 7,5 g 6-Aminocapronsäure mit einer Lösung von 0,9 g CuJ und 3 g LiBr (ca. 7,3 Mol bez. auf CuJ) in 15 g Wasser und 15 g Caprolactam gemischt und bei einem $N_2$-Schutzdruck von ca. 0,1 bar 8 Stunden auf 265°C erhitzt. Die Kupferkonzentrat-Polyamidschmelze ist fast farblos und völlig transparent. Es haben sich keine Kupferteilchen durch therm. Zersetzung gebildet. Der Cu-(I)-Gehalt liegt bei 0,2 Gew.-%.

Beispiel 5

Für Extruder-Spinnversuche werden folgende Granulat-Gemische hergestellt:

| Gemisch | Polyamid 6-Gran. Gew.-% | Konzentratgranulate Gew.-% |
|---------|-------------------------|----------------------------|
| 5.1 | 100,0 | 0,0 |
| 5.2 | 98,5 | 1,5 nach Beispiel 1 |
| 5.3 | 97,0 | 3,0 nach Beispiel 1 |
| 5.4 | 96,25 | 3,75 $TiO_2$R-Konzentrat 40 gew.-%ig |
| 5.5 | 96,25 | 3,75 nach Beispiel 2 |
| 5.6 | 94,75 | 3,75 nach Beispiel 2 + 1,5 nach Beispiel 1 |

Die 6 Granulat-Gemische werden an einer Extruder-Spinnanlage mit gut wirkendem Schmelze-Mischer und -Filter (Maschenweite 17 µm) für die Freibewetterung zu Monofilen mit dem Durchmesser 0,20 mm, für die Xenotest-Belichtung zu Multifilgarnen dtex 100 f 25 versponnen. Es werden keine Filterverstopfung durch metallische Cu-Teilchen festgestellt.

Die Alterungsbeständigkeit der Spinnprodukte wird durch die Reißkraft-Verlustwerte charakterisiert:

| Gemisch | Cu-(I)-Ge-halt mg Cu(I)/kg | $TiO_2$-Gehalt Gew.-% | Reißkraft-Verlustwerte % | |
|---------|---------------------------|----------------------|---------------------------|--|
| | | | 0,20 mm Mono-file, Bewetterung 6 Monate | dtex 100 f 500 Stunden, Xeno-test-Bel. |
| 5.1 | 0 | 0 | 49 | 22 |
| 5.2 | 30 | 0 | 38 | 14 |
| 5.3 | 60 | 0 | 34 | 11 |
| 5.4 | 0 | 1,5 | 56 | 64 |
| 5.5 | 30 | 1,5 | 25 | 9 |
| 5.6 | 60 | 1,5 | 21 | 3 |

**Patentansprüche**

**1.** Verfahren zur Herstellung von Formkörpern aus stabilisierten, synthetischen hochmolekularen Polyami-

EP 0 229 382 B1

den unter Verwendung eines Cu(I)-Halogenids und eines molaren Überschusses, bezogen auf Cu(I)-Halogenid, eines Alkalihalogenids, dadurch gekennzeichnet, daß man ein Gemisch, bestehend aus Cu-(I)-Iodid, einem molaren Überschuß von 300 bis 800 Mol-% an LiBr, Caprolactam und gegebenenfalls Wasser und/oder Pigmenten bei Temperaturen von 240 bis 290°C zu einem Stabilisatorkonzentrat polymerisiert, die Schmelze dieses Stabilisatorkonzentrats zu einem Granulat verarbeitet, und zusammen mit dem zu stabilisierenden Polyamidgranulat zu Formkörpern mit einem Gehalt von 10 bis 100 mg Cu(I) pro kg fertigem Formkörper verarbeitet.

**Claims**

**1.** A process for the production of mouldings from stabilized synthetic high molecular weight polyamides, using a Cu(I) halide and a molar excess, based on the Cu(I) halide, of an alkali metal halide, characterised in that a mixture consisting of Cu(I) iodide, a molar excess of from 300 to 800 mol-% of LiBr, caprolactam and optionally water and/or pigments is polymerised at temperatures from 240 to 290°C to produce a stabilizer concentrate and the melt of this stabilizer concentrate is worked up into a granulate and is worked up together with the polyamide granulate which is to be stabilized to produce mouldings containing from 10 to 100 mg of Cu(I) per kg of finished moulding.

**Revendications**

**1.** Procédé de production de pièces moulées à partir de polyamides synthétiques stabilisés de haut poids moléculaire, avec utilisation d'un halogénure de Cu(I) et d'un excès molaire, par rapport à l'halogénure de Cu(I), d'un halogénure alcalin, caractérisé en ce qu'on polymérise un mélange constitué d'iodure de Cu(I), d'un excès molaire de 300 à 800 moles % de LiBr, de caprolactame et le cas échéant d'eau et/ou de pigments à des températures de 240 à 290°C pour former un concentré d'agent stabilisant, on transforme la masse fondue de ce concentré d'agent stabilisant en un produit granulé que l'on met en oeuvre conjointement avec les granules de polyamide à stabiliser pour former des pièces moulées ayant une teneur de 10 à 100 mg de Cu(I) par kg de pièce moulée finie.

4